# FASCICULE DE BREVET EUROPEEN

(11) **EP 3 303 067 B1**
(45) Date de publication et mention de la délivrance du brevet: **09.10.2019**
(21) Numéro de dépôt: 16741057.0
(22) Date de dépôt: 03.06.2016
(51) Int. Cl.: B60R 19/48, G10K 11/00, B60R 11/00, G01S 13/93

(54) **SUPPORT POUR RADAR POUR VÉHICULE**
BEFESTIGUNG FÜR EIN RADAR EINES FAHRZEUGS
MOUNTING FOR A RADAR OF A VEHICLE

(30) Priorité: 05.06.2015 FR 1555154
(43) Date de publication de la demande: 11.04.2018
(73) Titulaire: Renault s.a.s., 92100 Boulogne-Billancourt (FR)
(72) Inventeur: LUCY, Philippe, 28210 Chaudon (FR); PERROTTO, Brice, 78180 Montigny Le Bretonneux (FR)
(86) Numéro de dépôt international: PCT/FR2016/051326
(87) Numéro de publication internationale: WO 2016/193635

(56) Documents cités:
- DE-A1-102005 037 151
- JP-A- 2007 030 535
- US-A1- 2007 063 133
- US-A1- 2014 070 982

## Description

La présente invention concerne, de manière générale, les radars pour véhicule automobile et se rapporte plus particulièrement à un support pour radar.

Par radar, on entend, dans le cadre de la présente description, tout type de détecteur de distance ou d'obstacle monté sur un véhicule.

La plupart des véhicules automobiles sont aujourd'hui équipés de radars d'assistance à la conduite. Afin d'assurer leur fonction, que ce soit aide au stationnement, alerte anticollision ou régulation de distance, ils sont préférentiellement positionnés à l'avant du véhicule.

Ces radars disposent d'un faisceau suffisamment étroit pour être reculé à l'arrière de la calandre et ne traversent aucun relief qui risquerait de fausser leur détection.

Dans une volonté d'amélioration continue de la précision des radars, les faisceaux utilisés sont de plus en plus larges, et leur capacité de balayage de plus en plus grande.

L'ouverture de ces faisceaux impose le changement de position de leur source. Le radar doit être placé à une position depuis laquelle le chemin qu'emprunte le faisceau ne présente aucun obstacle. Le seul emplacement qui répond à cette contrainte est au plus près de la face avant du véhicule.

Toutefois, à cette nouvelle localisation, une autre difficulté doit être surmontée. La face avant du véhicule est fortement exposée aux chocs. Il convient notamment de s'intéresser aux conséquences d'un choc de faible ampleur, comme les collisions impliquant un piéton ou tout autre obstacle d'envergure similaire. Ces collisions sont suffisamment faibles pour ne détériorer que localement l'avant du véhicule mais sont par ailleurs suffisamment fortes pour risquer d'endommager le radar, dans le cas où celui-ci est placé à proximité directe de la face avant du véhicule.

Le radar, qui est dans une position fixe, peut être, selon la violence du choc, déformé voire considérablement détérioré.

Par conséquent, il est nécessaire de mettre en place un dispositif destiné à protéger le radar en cas de choc de faible amplitude.

Le radar doit être apte à se déplacer, et plus précisément de passer de sa position au plus près de la face avant, vers une nouvelle position plus reculée. Les dommages matériels pourront ainsi être évités. Le document JP 2007 030535 A révèle un support pour radar pour véhicule selon le préambule de la revendication 1.

L'invention a donc pour but de remédier à ces inconvénients et de proposer un support pour radar pour véhicule disposé au plus près de la face avant. Le support combine raideur et souplesse pour assurer, à la fois, la précision de la détection du radar lors son fonctionnement, et la capacité de pouvoir s'effacer en cas de choc.

Il est donc proposé un support pour radar pour véhicule définit par les caractéristiques de la revendication 1.

Une telle caractéristique comme la ligne de pliage peut s'étendre transversalement afin de réunir deux bords parallèles de la plaque rétractable.

Avantageusement, la forme de la patte est de type accordéon en ce sens qu'elle comprend plusieurs lignes de pliage parallèles entre elles.

Chaque patte rétractable peut comprendre trois lignes de pliage.

La dimension des lignes de pliage peut être variable afin de guide la déformation du support pour radar en cas de choc.

L'angle formé entre deux portions adjacentes de la patte rétractable et séparées par une ligne de pliage peut être compris entre 45° et 90°.

Une ligne de pliage peut est une rainure visant à réduire localement l'épaisseur de matière de la patte rétractable.

Ainsi selon les normes de protection des piétons, il peut être rendu possible d'adapter l'effacement du radar. Pour répondre ainsi favorablement aux différentes normes de protection des piétons, établies selon des zones géographies, il est possible de modifier directement l'angle d'inclinaison de portions adjacentes de la patte rétractable, ou bien la localisation de chacune des lignes de pliage, voire même l'épaisseur de la rainure formant une ligne de pliage.

De manière encore plus avantageuse, les parties de l'élément principal sont réunies par trois pattes repliables.

Les différentes pattes rétractables peuvent présenter des pliages distinctes tant par leur localisation différentes sur chacune des pattes repliables que leur conception même.

Préférablement, l'élément d'accueil est situé à l'arrière du logo qui est localisé à l'avant du véhicule. Cet emplacement est le plus proche disponible de la face avant du véhicule et permet une détection précise. A cette position, le faisceau, bien que large, ne traverse aucun relief propre au véhicule qui pourrait fausser la détection.

Selon une autre caractéristique de l'invention, l'élément d'accueil est raide. Bien que dans le mode de réalisation illustré le support est apte à se rétracter sous un effort d'au moins 80 daN, le support doit être exempt de toute vibration qui pourrait altérer le fonctionnement et la précision du radar.

Selon une autre caractéristique de l'invention, la fréquence vibratoire de l'élément principal est de 50 Hz. Cette valeur est choisie de manière à assurer à la fois la raideur de l'élément et sa souplesse en vue de permettre aux pattes de se rétracter sous un effort d'au moins 80daN.

Avantageusement, l'élément d'accueil est en plastique.

De manière alternative, l'élément d'accueil peut être réalisé en matière métallique.

L'élément principal peut également être en plastique.

Selon une variante de réalisation, l'élément principal peut être réalisé en matière métallique.

Dans un autre mode de réalisation, l'élément principal et l'élément d'accueil peuvent être monoblocs. Dans ce cas, l'ensemble est de préférence en plastique.

L'invention concerne également un véhicule automobile comprenant un support pour radar.

D'autres buts, avantages et caractéristiques ressortiront de la description qui va suivre, donnée à titre purement illustratif et faite en référence aux dessins annexés sur les lesquels :
- la figure 1 est une vue en perspective de l'avant d'un véhicule comprenant un support selon l'invention ; et
- la figure 2 est une vue en perspective de la pièce principale du support selon l'invention.

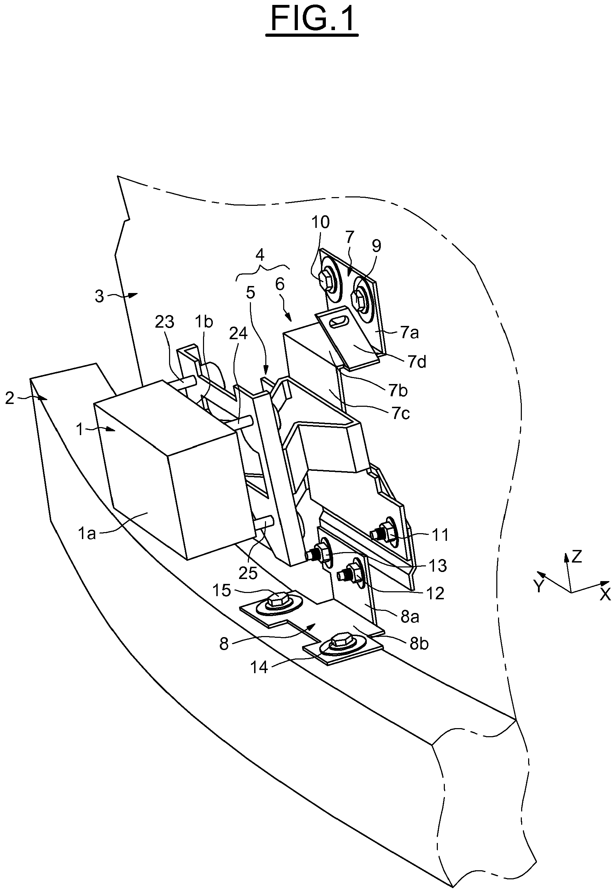

Dans la suite de la description, les termes « longitudinal », « transversal », « vertical », « avant », « arrière », « gauche » et « droite », s'entendent par rapport au repère orthogonal usuel des véhicules automobiles, représenté sur la figure 1, et comprenant :
- un axe longitudinal X, horizontal et dirigé de l'avant vers l'arrière du véhicule ;
- un axe transversal Y, horizontal, perpendiculaire à l'axe X et dirigé de la gauche à la droite du véhicule qui se déplace vers l'avant ;
- un axe Z, orthogonal aux axes X et Y et vertical dirigé de bas en haut.

Comme illustré en figure 1, un radar désigné par la référence numérique générale 1 est disposé au-dessus d'une traverse 2 dont est pourvu l'avant d'un véhicule 3. Le radar 1 comprend deux faces la et 1b. La face la est disposée en regard et à proximité directe d'un logo, non représenté sur les figures, dont est dotée la face avant du véhicule 3. La face 1b est disposée en regard d'un support 4, fixé à la fois à l'avant du véhicule 3 et à la traverse 2. Le faisceau débouche de la face la et s'ouvre en direction du logo. Le radar 1 comprend également trois bras 23, 24 et 25.

Dans l'exemple illustré, le support 4 comprend deux éléments en tôle, un élément principal 5 qui s'étend transversalement et un élément d'accueil 6 qui s'étend verticalement.

Par ailleurs, l'élément d'accueil 6 correspond avantageusement à un ensemble de deux pièces 7 et 8.

La première pièce 7 peut être elle-même formée de quatre portions 7a, 7b, 7c et 7d afin d'épouser la forme des pièces déjà présentes à l'avant du véhicule 3. De cette façon, la portion verticale 7a débouche sur la portion perpendiculaire 7b, qui s'étend horizontalement selon l'axe X jusqu'à la portion 7c. La portion 7c est parallèle à la portion 7a. La portion 7b débouche également sur la portion 7d, qui s'étend verticalement, selon l'axe Z, de manière à être perpendiculaire à la portion 7a. Deux moyens de fixation 9 et 10 traversent la portion 7a et maintiennent la pièce 7 sur l'avant du véhicule 3. Avantageusement, ces moyens correspondent à deux boulons 9 et 10. Un autre boulon, non représenté, traverse la portion 7d et renforce le maintien de la pièce 7 sur l'avant du véhicule 3.

La seconde pièce 8 peut être formée, comme dans l'exemple illustré, par deux portions 8a et 8b. La portion 8a, parallèle à la portion 7c, s'étend contre l'extrémité libre de celle-ci. Des moyens de fixation, de préférence deux boulons 12 et 13 traversant les portions 8a et 7c assurent à la fois le maintien de la pièce 8 sur la pièce 7, et le maintien de ces deux pièces 7 et 8 sur l'avant de la voiture 3. La portion 8b, perpendiculaire à la portion 8a, s'étend en regard de la traverse 2. Deux moyens de fixation, avantageusement deux boulons 14 et 15, traversent la portion 8b et maintiennent la pièce 8 sur la traverse 2.

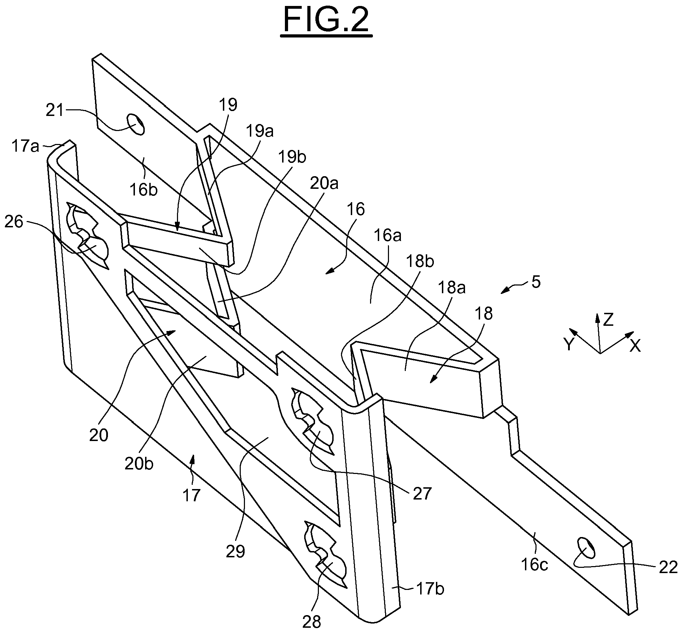

A titre d'exemple, l'élément principal 5 est représenté à la figure 2. L'élément 5 comprend deux parties parallèles 16 et 17, disposées en vis-à-vis. La première partie 16, qui peut être formée de trois portions 16a, 16b et 16c, et la seconde partie 17, sont rendues solidaires par, avantageusement, trois pattes 18, 19 et 20.

La patte 18 s'étend de la jonction entre les portions 16a et 16c de la première partie 16 jusqu'au bord latéral 17b de la seconde partie 17. Les pattes 19 et 20 s'étendent de la jonction entre les portions 16a et 16b jusqu'au bord latéral 17a, et la patte 19 est disposée dans un plan supérieur à celui de la patte 20, selon l'axe Z. Les pattes 18, 19 et 20 sont de type accordéon, en ce sens qu'elles comprennent respectivement au moins une ligne de pliage s'étendant le long de l'axe Z. Les deux portions formant chaque patte 18, 19 et 20, respectivement, 18a et 18b, 19a et 19b, 20a et 20b, s'étendent de préférence dans le plan XY et se rejoignent pour former un angle rentrant, de sorte que les angles des pattes 19 et 20 font avantageusement face à l'angle rentrant de la patte 18. Les pattes 18, 19 et 20 confèrent un intervalle entre les deux parties 16 et 17.

Selon une variante de réalisation non représentée, au moins l'une d'entre les pattes 18, 19 et 20 peut comprendre des portions formant un angle aigu qui fait face ou qui est opposé à au moins une autre des pattes 18, 19 et 20.

Selon une autre variante de réalisation envisagée, au moins l'une d'entre les pattes 18, 19 et 20 comprend une ligne de pliage délimitant la partie sommitale des portions de la patte considérée, s'étendant parallèlement à un axe Y.

Tels qu'illustrés, deux orifices 21 et 22 sont ménagés respectivement sur les portions 16b et 16c, de sorte que des moyens de fixation les traversent et maintiennent à la fois l'élément principal 5 sur l'élément d'accueil 6 et l'ensemble 5 et 6 sur l'avant du véhicule 3. Comme illustré à la figure 2, les moyens de fixation correspondent à deux boulons. Seul le boulon 11, qui traverse le trou 22, est représenté. Le second boulon, qui traverse le trou 21, n'est pas visible sous cet angle de vue du support 4.

On pourra prévoir que l'élément principal 5 comporte trois orifices 26, 27 et 28 ménagés sur la seconde partie 17, de manière à ce qu'ils soient respectivement traversés par les trois bras 23, 24 et 25 du radar 1. Les bras 23, 24 et 25 maintiennent le radar 1 sur l'élément principal 5.

Dans l'exemple illustré, une ouverture 29 est prévue afin d'alléger le support 4.

Selon plusieurs variantes non représentées, et toujours dans le but d'alléger le support 4, l'élément d'accueil 6 et/ou l'élément principal 5 pourront être réalisés en matière plastique.

Dans un autre mode de réalisation, on pourra également prévoir que l'élément d'accueil 6 et l'élément principal 5 soient monoblocs. Il est difficile de contrôler la raideur lorsque les deux éléments en tôle sont monoblocs. Dans ce cas de figure, l'ensemble sera donc de préférence en plastique.

En cas de choc à l'avant du véhicule 3, l'effort entraîne le radar 1 vers l'arrière et amène les pattes 18, 19 et 20 à se rétracter. La valeur des angles rentrants précédemment décrits augmente, et la seconde partie 17 de l'élément principal 5 se rapproche de la première partie 16. L'élément d'accueil 6 et la première partie 16 de l'élément principal 5 restent quant à eux fixes.

Le support 4 absorbe l'énergie du choc grâce à la déformation des pattes de l'élément principal 5, de manière à protéger le radar 1. De manière avantageuse, une telle absorption de l'énergie du choc favorise l'amortissement d'un choc piéton. Les dommages subis par le radar 1 sont diminués voire totalement évités. Il en va de même pour le piéton, le radar ne formant ainsi pas un point dur susceptible de provoquer des blessures en cas de choc.

On pourra prévoir que les pattes 19, 20 et 21 prennent une autre forme que la forme de type accordéon, afin d'assurer toujours leur rétractabilité. On pourra par exemple doter la seconde partie 17 de coulisses, le long desquels les pattes, de type coulisseau, fixées à la première partie 16, seront capables de coulisser.

## Revendications

1. Support pour radar pour véhicule comprenant un élément principal (5) et un élément d'accueil (6), l'élément principal (5) comprenant deux parties (16, 17), la première partie (16) étant apte à coopérer avec l'élément d'accueil (6) situé à l'avant du véhicule (3), la seconde partie (17) étant apte à coopérer avec le radar (1), **caractérisé en ce que** les deux parties (16, 17) de l'élément principal (5) sont réunies par au moins une patte rétractable (18, 19, 20) comportant au moins une ligne de pliage.

2. Support pour radar selon la revendication 1, **caractérisé en ce que** la patte (18, 19, 20) se rétracte sous un effort d'au moins 80 daN.

3. Support pour radar selon l'une des revendications 1 ou 2, **caractérisé en ce que** la forme de la patte (18, 19, 20) est de type accordéon en ce sens qu'elle comprend plusieurs lignes de pliage parallèles entre elles.

4. Support pour radar selon l'une quelconque des revendications précédentes, **caractérisé en ce que** les parties (16, 17) de l'élément principal (5) sont réunies par trois pattes repliables (18, 19, 20).

5. Support pour radar selon l'une quelconque des revendications précédentes, **caractérisé en ce que** l'élément d'accueil (6) est raide.

6. Support pour radar selon l'une quelconque des revendications précédentes, **caractérisé en ce que** la fréquence vibratoire de l'élément principal (5) est de 50 Hz.

7. Support pour radar selon l'une quelconque des revendications précédentes, **caractérisé en ce que** l'élément d'accueil (6) est en plastique.

8. Support pour radar selon l'une quelconque des revendications précédentes, **caractérisé en ce que** l'élément principal (5) est en plastique.

9. Support pour radar selon la revendication 8, **caractérisé en ce que** l'élément principal (5) et l'élément d'accueil (6) sont monoblocs.

10. Véhicule automobile comprenant un radar, **caractérisé en ce qu'**il comprend un support pour radar (1) selon l'une quelconque des revendications 1 à 9.

11. Véhicule selon la revendication 10, **caractérisé en ce que** l'élément d'accueil (6) est situé à l'arrière d'un logo qui est localisé à l'avant du véhicule (3).

## Patentansprüche

1. Halterung für ein Radar für ein Fahrzeug, umfassend ein Hauptelement (5) und ein Aufnahmeelement (6), wobei das Hauptelement (5) zwei Teile (16, 17) umfasst, wobei das erste Teil (16) geeignet ist, mit dem an der Vorderseite des Fahrzeugs (3) gelegenen Aufnahmeelement (6) zusammenzuwirken, wobei das zweite Teil (17) geeignet ist, mit dem Radar (1) zusammenzuwirken, **dadurch gekennzeichnet, dass** die beiden Teile (16, 17) des Hauptelements (5) durch mindestens eine einziehbare Lasche (18, 19, 20) verbunden sind, die mindestens eine Biegelinie umfasst.

2. Halterung für ein Radar nach Anspruch 1, **dadurch gekennzeichnet, dass** die Lasche (18, 19, 20) unter einer Kraft von mindestens 80 daN eingezogen wird.

3. Halterung für ein Radar nach einem der Ansprüche 1 oder 2, **dadurch gekennzeichnet, dass** die Form der Lasche (18, 19, 20) akkordeonartig in dem Sinne ist, dass sie mehrere zueinander parallele Biegelinien umfasst.

4. Halterung für ein Radar nach einem der vorhergehenden Ansprüche, **dadurch gekennzeichnet, dass** die Teile (16, 17) des Hauptelements (5) durch drei zusammenfaltbare Laschen (18, 19, 20) verbunden sind.

5. Halterung für ein Radar nach einem der vorhergehenden Ansprüche, **dadurch gekennzeichnet, dass** das Aufnahmeelement (6) steif ist.

6. Halterung für ein Radar nach einem der vorhergehenden Ansprüche, **dadurch gekennzeichnet, dass** die Schwingfrequenz des Hauptelements (5) 50 Hz beträgt.

7. Halterung für ein Radar nach einem der vorhergehenden Ansprüche, **dadurch gekennzeichnet, dass** das Aufnahmeelement (6) aus Kunststoff ist.

8. Halterung für ein Radar nach einem der vorhergehenden Ansprüche, **dadurch gekennzeichnet, dass** das Hauptelement (5) aus Kunststoff ist.

9. Halterung für ein Radar nach Anspruch 8, **dadurch gekennzeichnet, dass** das Hauptelement (5) und das Aufnahmeelement (6) einstückig sind.

10. Kraftfahrzeug mit einem Radar, **dadurch gekennzeichnet, dass** es eine Halterung für ein Radar (1) nach einem der Ansprüche 1 bis 9 umfasst.

11. Fahrzeug nach Anspruch 10, **dadurch gekennzeichnet, dass** das Aufnahmeelement (6) hinter einem Logo gelegen ist, das sich an der Vorderseite des Fahrzeugs (3) befindet.

## Claims

1. Mounting for a radar of a vehicle comprising a main element (5) and a receiving element (6), the main element (5) comprising two parts (16, 17), the first part (16) being capable of cooperating with the receiving element (6) arranged at the front of the vehicle (3), the second part (17) being capable of cooperating with the radar (1), **characterized in that** the two parts (16, 17) of the main element (5) are joined by at least one retractable lug (18, 19, 20) comprising at least one fold line.

2. Mounting for a radar according to Claim 1, **characterized in that** the lug (18, 19, 20) retracts under a force of at least 80 daN.

3. Mounting for a radar according to either of Claims 1 and 2, **characterized in that** the lug (18, 19, 20) is concertina-shaped **in that** it comprises several parallel fold lines.

4. Mounting for a radar according to any one of the preceding claims, **characterized in that** the parts (16, 17) of the main element (5) are joined by three foldable lugs (18, 19, 20).

5. Mounting for a radar according to any one of the preceding claims, **characterized in that** the receiving element (6) is stiff.

6. Mounting for a radar according to any one of the preceding claims, **characterized in that** the frequency of vibration of the main element (5) is 50 Hz.

7. Mounting for a radar according to any one of the preceding claims, **characterized in that** the receiving element (6) is made from plastic.

8. Mounting for a radar according to any one of the preceding claims, **characterized in that** the main element (5) is made from plastic.

9. Mounting for a radar according to Claim 8, **characterized in that** the main element (5) and the receiving element (6) are a one-piece assembly.

10. Motor vehicle comprising a radar, **characterized in that** it comprises a mounting for a radar (1) according to any one of Claims 1 to 9.

11. Vehicle according to Claim 10, **characterized in that** the receiving element (6) is situated behind a logo that is located at the front of the vehicle (3).
